# EUROPÄISCHE PATENTSCHRIFT

(11) **EP 1 503 228 B1**
(45) Veröffentlichungstag und Bekanntmachung des Hinweises auf die Patenterteilung: **24.10.2007**
(21) Anmeldenummer: 03016668.0
(22) Anmeldetag: 01.08.2003
(51) Int. Cl.: G02B 5/128, E01F 9/04

(54) **Reflexkörper zum Aufbringen auf Horizontalmarkierungen**
Reflective bodies to be applied on horizontal roadmarkings
Corps réflechissants à appliquer sur des marquages horizontaux

(43) Veröffentlichungstag der Anmeldung: 02.02.2005
(73) Patentinhaber: SWARCO VESTGLAS Vestische Strahl- und Reflexglas GmbH, D-45659 Recklinghausen (DE); Bollag, Moses, CH-1206 Geneve (CH)
(72) Erfinder: Swarovski, Manfred, 6112Wattens/Tirol (AT); Bollag, Moses, 1206 Genf (CH); Fasching, Karl-Heinz, 3372 Sankt Georgen (AT)
(74) Vertreter: Bugnion Genève

(56) Entgegenhaltungen:
- EP-A- 1 347 099
- DE-A- 19 521 847
- US-A- 5 897 914

## Beschreibung

Die Erfindung bezieht sich auf einen Reflexkörper zum Aufbringen auf Horizontalmarkierungen von Verkehrs- und Verkehrsleitflächen, bestehend aus einem harten Kern mit auf dessen Oberfläche verteilten reflektierenden Glasperlen, auf ein Verfahren zur Herstellung dieser Reflexkörper, sowie auf Vorrichtungen zur Durchführung dieses Verfahrens.

Derartiger Reflexkörper sind aus der EP Anmeldung 03004938.1, angemeldet am 10.03.03 derselben Anmelder bekannt und bestehen aus einem harten Teilchen als Kern, bei dem es sich um Quarz, Bruchglas, Kies, Split oder auch Glasperlen handelt, aus einer diesen harten Kern umgebenden Farbschicht und in diese teilweise eingebetteten reflektierenden Glasperlen. Diese Reflexkörper haben den Zweck, die Sichtbarkeit von Strassenmarkierungen, insbesondere deren Nachtsichbarkeit bei Regen und Nässe, selbst unter einem Wasserfilm, zu verbessern. Das geschieht vor allem dadurch, dass die Reflexperlen auf dem Umfang der mit Farbe bedeckten Teilchen besonders gut vom Autoscheinwerfer angeleuchtet und retroreflektiert werden. Ausserdem lassen sich diese Reflexkörper ohne zusätzliche Vorrichtungen, wie z. B. doppelte Farbspritzpistolen und Perlstreuer, auf die Horizontalmarkierungen aufbringen und stellen eine vorteilhafte Alternative zu den bisher bekannten profilierten Markierungen dar, wie sie z.B. in der EP 0 280 102 B1 beschrieben werden.

Um genügend Reflexperlen in die Farbschicht einzubetten und eine möglichst starke Haftung an dieser Farbschicht zu erhalten, sollte die Farbschicht hinreichend dick sein. Es hat sich jedoch gezeigt, dass die vollständige Umhüllung der harten Kerne mit hinreichend dicken Farbschichten, welche mit möglichst vielen und fest haftenden Glasperlen bedeckt werden können, schwierig ist und nur mit verhältnismässig grossem Herstellungsaufwand möglich wäre.

Aus der DE 195 21 847 A1 sind Licht reflektierende Bausteine mit Partikeln in Form von transparenten Kugeln aus Glas, Kunststoff oder dergleichen bekannt, wobei mehrere Einzelkugeln zu einem Kugelhäufchen mittels eines Klebers, jedoch ohne Verwendung eines Trägers zusammen geklebt sind, wobei der Kleber sich zwischen den Kugeln, entlang ihren Wandungen ausbreitet und einige Kugeln zu einem Häufchen zusammenklebt.

Aus der EP 0 565 765 A2 des einen der Anmelder ist ebenfalls ein Reflexionskörper für Strassenmarkierungen bekannt, der einen granalienartigen, kornartigen oder plättchenartigen elastischen Träger aufweist, der mit einer Beschichtung aus mikrofeinen Glasperlen versehen ist. Dieser Träger besteht aus einem thermoplastischen Kunststoff oder aus thermoplastischem Markierungsmaterial, in dessen Oberfläche die Glasperlen eingelassen oder bei erwärmtem Träger eingesunken sind. Diese Reflexkörper erfordern zunächst eine Herstellung der elastischen Trägerteilchen und dann deren Beschichtung mit Glasperlen, über welche im erwähnten Dokument nichts weiter ausgesagt wird.

Schliesslich sind aus der US 4 983 458 A Reflexkörper in Form von tetraederförmige Kunststoffkörper mit an deren ebenen Flächen haftenden und im Körperinneren eingebetteten Glasperlen bekannt. Allerdings sind für die Herstellung und Formung der Kunststoff-Tetraeder reichlich komplizierte und aufwendige Arbeitsgänge erforderlich.

Der vorliegenden Erfindung liegt die Aufgabe zugrunde, ausgehend von der oben erwähnten EP Anmeldung 03004938.1 A1, Reflexkörper zu schaffen, die eine lich grössere Menge an reflektierende Glasperlen, als bisher mit vertretbarem Aufwand möglich, auf ihrer Oberfläche aufweisen und welche nicht nur an einer Farbschicht mehr oder weniger fest haften, sondern auch tief und damit fest in die Farbmasse eingebettet werden können. Ausserdem sollen die Reflexkörper nach der Erfindung kostengünstig herstellbar sein und nach ihrer Verlegung auf Horizontalmarkierungen auch nach mehr oder weniger starkem Abrieb durch den darüber rollenden Verkehr ihr Reflexionseigenschaften behalten. Ferner bezweckt die Erfindung, ein geeignetes Verfahren sowie Vorrichtungen zur Durchführung desselben zu schaffen.

Zur Lösung dieser Aufgabe sind der Reflexkörper nach der Erfindung durch die im Anspruch 1 angegebenen Merkmale und das Verfahren nach der Erfindung durch die im Anspruch 7 angegebenen Merkmale sowie die Vorrichtungen durch die in den Ansprüchen 12 und 13 angegebenen Merkmale gekennzeichnet.

Die Reflexkörper nach der Erfindung haben alle diejenigen vorteilhaften Effekte und Eigenschaften, welche weiter oben im Zusammenhang mit den aus der EP Anmeldung 03004938.1 bekannten Reflexkörpern beschrieben wurden, lassen sich jedoch einfacher und zuverlässiger herstellen, da der harte Kern nicht aus Fremdteilchen besteht, sondern direkt aus den Tropfen der flüssigen Farbmasse gebildet wird, in welche die Reflexperlen vor der Trocknung bzw. Aushärtung in die Farboberfläche eingebettet werden.

Zur Bildung der Farbtropfen wird die Viskosität der Farbmasse und die Öffnungen, durch welche man diese Farbmasse heraustropfen lässt, so eingestellt, dass Farbtropfen in einem vorgegebenen Grössenbereich, wie angegeben, entstehen und auf reflektierende Glasperlen fallen oder mit diesen im Fallen besprüht werden. Die Farbtropfen werden dann sozusagen mit reflektierenden Glasperlen beschichtet.

Weitere bevorzugte Merkmale der Erfindung ergeben sich aus den Unteransprüchen 2 bis 6 und 8 bis 11.

Die Erfindung wird an Hand der Zeichnungen beispielsweise näher erläutert.

Figur 1 zeigt schematisch eine erste Ausführungsform einer Vorrichtung, mit der das Verfahren nach der Erfindung zur Herstellung von Reflexkörpern durchgeführt werden kann.

Figur 2 zeigt schematisch ein zweite Ausführungsform einer solchen Vorrichtung.

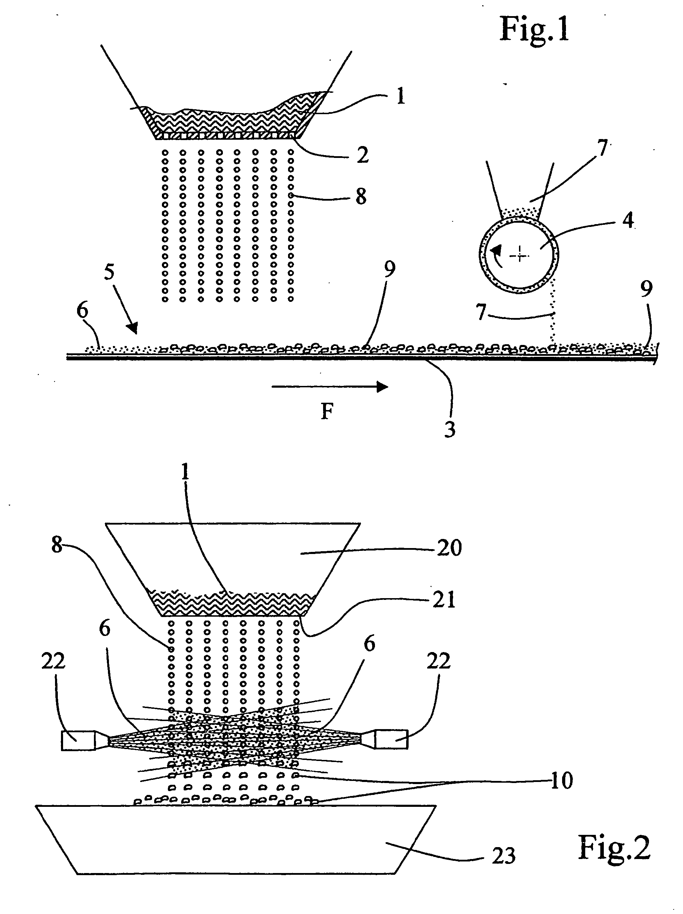

Nach Figur 1 hat die Vorrichtung einen Behälter 1, der einen perforierten Boden 2 aufweist, und im Abstand darunter ein Förderband als Unterlage 3 zur Aufnahme einer mehrlagigen Schicht 5 aus reflektierenden Glasperlen 6. Diese Reflexperlschicht 5 hat z.B. eine Dicke von 1 bis 3 cm, und die reflektierende Glasperlen 6 haben einen Durchmesserbereich von 40 bis 400 µ, vorzugsweise von 100 bis 250 µ. Es handelt sich vorzugsweise um handelsübliche High-Index-Perlen mit einem Brechungsindex von mindestens 1,90.

Das Förderband 3 wird mit einer gewissen Geschwindigkeit stetig unter dem Behälter 1 in Richtung des Pfeils F fortbewegt. In Bewegungsrichtung des Förderbands 3 gesehen befindet sich im seitlichen Abstand vom Behälter 1 über dem Förderband 3 ein Perlstreubehälter 4, der mit reflektierenden Glasperlen 7 gefüllt ist, die den gleichen Durchmesserbereich haben wie die reflektierenden Glasperlen 6 der Schicht 5 auf dem Förderband 3 und welche gleichmässig verteilt auf dieses Förderband herabfallen.

Der Behälter 1 ist mit einer flüssigen, aushärtbaren Farbmasse gefüllt. Die Viskosität dieser Farbmasse sowie die Grösse der Öffnungen im Behälterboden 2 sind so bemessen sind, dass die aus den Öffnungen heraustropfende flüssige Farbe Tropfen 8 in einem vorgegebenen Grössenbereich bildet; der Durchmesser bzw. die maximale Linearabmessung dieser Tropfen, welche die Grösse der späteren Reflexkörper bestimmen, liegt im Bereich von 0.5 bis 4,0 mm, vorzugsweise von 1,0 bis 3,0 mm. Bei der Farbmasse handelt es sich vorzugsweise um ein Mehrkomponenten-Material, z. B. Methylmetacrylat, eine Zweikomponenten-Kaltplastik. Es kann auch eine thixotrope Wasserfarbe wie Aquaplast (eingetragenes Warenzeichen) oder ein thermoplastisches oder UV-härtbares Material verwendet werden.

Die herabfallenden flüssigen Farbtropfen 8 prallen auf die auf dem Förderband 3 fortbewegten, die Schicht 5 bildenden reflektierenden Glasperlen 6, welche von unten teilweise oder gegebenenfalls auch ganz in die Farbtropfen eintauchen und von diesen bedeckt werden. Auf diese Weise bildet sich eine Schicht aus teilweise mit anhaftenden oder eingetauchten reflektierenden Glasperlen versehenen Farbtropfen 9. Sobald sich diese Schicht auf dem Förderband 3 unter dem Perlstreubehälter 4 hindurch bewegt, fallen weitere reflektierende Glasperlen 7 auf diese Tropfenschicht, wobei diese reflektierenden Glasperlen 7 nunmehr von oben in die noch immer weitgehend flüssigen Farbtropfen 9 teilweise oder gegebenenfalls auch vollständig eintauchen. Es entsteht auf diese Weise sozusagen eine sandwichartige Anordnung von zwischen Glasperlschichten eingeklemmten flüssigen Farbtropfen 10, welche auf ihrem ganzen Umfang mit einer Vielzahl von reflektierenden Glasperlen versehen sind, die nach Trocknung bzw. Aushärtung der Farbtropfen fest an und in diesen haften. Der Abstand des Perlstreubehälters 4 vom Behälter 1 sowie die Vorschubgeschwindigkeit des Förderbands 3 werden so gewählt, dass die Farbtropfen 9 beim Vorbeigang unter dem Perlstreubehälter 4 noch genügend flüssig sind, so dass die Reflexperlen 7 gut in die Farbtropfen eintauchen können.

Anschliessend lässt man die so gebildeten Farbtropfen 10 trocknen bzw. aushärten, gegebenenfalls mittels UV-Strahlung. Man erhält so vielseitig verwendbare Reflexkörper, die in an sich bekannter Weise auf Horizontalmarkierungen wie insbesondere Begrenzungs- und Leitlinien zur Kennzeichnung von Fahrbahnen aufgestreut werden können und sich durch eine besonders gute Reflexion und insbesondere Retroreflexion sowie eine lange Lebensdauer auch bei starkem Verkehr auszeichnen.

Eine andere Ausführungsform der Vorrichtung zur Durchführung eines abgewandelten Verfahrens, mit dem Reflexkörper nach der Erfindung herstellbar sind, ist schematisch in Figur 2 dargestellt. Diese Vorrichtung hat wiederum einen die flüssige Farbmasse aufnehmenden Behälter 20 mit einem perforierten Boden 21, aus dessen Öffnungen man flüssige Farbtropfen 8 heraustropfen lässt, deren Grössenbereich dem des ersten Ausführungsbeispiels entspricht. Um die Fallstrecke der Farbtropfen 8 verteilt sind mehrere Perlstreupistolen 22 angeordnet, aus denen reflektierende Glasperlen 6 derselben Grössenordnung wie beim ersten Ausführungsbeispiel auf die herabfallenden Farbtropfen 8 geschossen werden, so dass sie teilweise oder vollständig in die Farbtropfen eindringen. Die so mit Reflexperlen versehenen Farbtropfen 10 werden in einem Sammelbehälter 23 aufgefangen und durch geeignete Mittel getrocknet bzw. ausgehärtet.

Nach Aushärtung der Tropfen, bzw. der Reflexkörper, wird am Ende des Fliessbandes eine Siebvorrichtung eingerichtet, welche die harten Farbtropfen von den übrig gebliebenen reflektierenden Glasperlen auf der Siebvorrichtung trennt, bzw. ausgesiebt.

Die so hergestellten Farbtropfen erreichen eine Retroreflexion bis zu 1500 mcd² und können in kritischen Verkehrsbereichen, wie z.B. Nebelzonen une Tunnels erfolgreich eingesetzt werden.

Die verwendete Farbmasse kann weiss oder andersfarbig, z.B. rot oder grün, sein. Die Reflexperlen können zuvor mit einem Haftvermittler behandelt werden.

Die Erfindung ist nicht auf die angegebenen Verfahren und Vorrichtungen beschränkt, sondern schliesst alle Massnahmen ein, mit denen einen harten Farbtropfen als Kern aufweisende Reflexkörper gemäss Anspruch 1 hergestellt werden können.

## Patentansprüche

1. Reflexkörper zum Aufbringen auf Horizontalmarkierungen von Verkehrs- oder Verkehrsleitflächen, bestehend aus einer Vielzahl von reflektierenden Glasperlen, die durch einen Kleber zusammengehalten werden, wobei der Kleber aus einer getrockneten oder ausgehärteten, im flüssigen Zustand Tropfen bildenden Farbmasse besteht, **dadurch gekennzeichnet, dass** der getrocknete oder ausgehärtete Farbtropfen einen harten Kern mit einem Durchmesser bzw. einer maximalen Linearabmessung von 0.5 bis 4,0 mm, vorzugsweise von 1,0 bis 3,0 mm, bildet, und dass der Umfang des harten Farbtropfens mit einer Vielzahl von vor dem Trocknen bzw. Aushärten desselben teilweise in diesen eingetauchten reflektierenden Glasperlen bedeckt ist, die wesentlich kleiner als der Farbtropfen sind.

2. Reflexkörper nach Anspruch 1, **dadurch gekennzeichnet, dass** der Farbtropfen ferner eine Vielzahl von in der Farbmasse bereits eingemischten reflektierenden Glasperlen enthält, vorzugsweise 15% bis 30%.

3. Reflexkörper nach Anspruch 1 oder 2, **dadurch gekennzeichnet, dass** die reflektierenden Glasperlen einen Brechungsindex von mindestens 1,90 haben.

4. Reflexkörper nach einem der Ansprüche 1 bis 3, **dadurch gekennzeichnet, dass** die erwähnte Farbmasse aus einem Mehrkomponenten-Material wie Methylmetacrylat, aus einer thixotropen Wasserfarbe wie Aquaplast (eingetragenes Warenzeichen) oder einem thermoplastischen oder UV-härtbaren Material besteht.

5. Reflexkörper nach einem der vorangehenden Ansprüche, **dadurch gekennzeichnet, dass** der Farbtropfen aus einer weissen oder andersfarbigen Farbmasse besteht.

6. Reflexkörper nach einem der vorangehenden Ansprüche, **dadurch gekennzeichnet, dass** die reflektierenden Glasperlen einen Durchmesser von 40 bis 400 µ, vorzugsweise von 100 bis 250 µ, haben.

7. Verfahren zum Herstellen von Reflexkörpern, die dazu bestimmt sind, auf Horizontalmarkierungen von Verkehrsflächen und Verkehrsleitflächen aufgebracht zu werden, wonach man eine flüssige, Tropfen bildende, aushärtbare Farbmasse unter Bildung von Farbtropfen abtropfen lässt und mit reflektierenden Glasperlen in Kontakt bringt, **dadurch gekennzeichnet, dass** Farbtropfen mit einem Durchmesser bzw. einer maximalen Linearabmessung von 0,5 bis 4,0 mm, vorzugsweise von 1,0 bis 3,0 mm, gebildet werden und dass die noch flüssigen Farbtropfen mit reflektierenden Glasperlen, die wesentlich kleiner als die Farbtropfen sind, derart in Kontakt gebracht werden, dass eine Vielzahl dieser reflektierenden Glasperlen sich jeweils in die Farboberfläche der Tropfen einbettet, woraufhin man die so mit reflektierenden Glasperlen versehenen Farbtropfen trocknen bzw. aushärten lässt.

8. Verfahren nach Anspruch 7, **dadurch gekennzeichnet, dass** man die flüssige Farbmasse durch Öffnungen im Boden eines die Farbmasse aufnehmenden Behälters heraus tropfen lässt und dass die Viskosität der Farbmasse sowie die Grösse der Öffnungen des Behälterbodens so gewählt werden, dass sich Farbtropfen mit der erwähnten vorgegebenen Tropfengrösse bilden.

9. Verfahren nach Anspruch 7 oder 8, wonach eine mehrlagige Schicht von reflektierenden Glasperlen auf einer Unterlage ausgebreitet wird, auf welche man die erwähnte flüssige Farbmasse tropfen lässt, wobei die Unterlage und die tropfende Farbmasse relativ zueinander bewegt werden, **dadurch gekennzeichnet, dass** reflektierende Glasperlen mit Durchmessern von 40 bis 400 µ verwendet werden und dass vor der Trocknung bzw. Aushärtung der herabgefallenen Farbtropfen weitere reflektierende Glasperlenperlen der genannten Grösse auf die auf der Unterlage befindlichen, die ersterwähnten reflektierenden Glasperlen bedeckenden, noch flüssigen Farbtropfen gestreut werden, so dass eine sandwichartige Anordnung von zwischen Glasperlenschichten eingeklemmten flüssigen Farbtropfen entsteht, woraufhin man die mit teilweise und gegebenenfalls vollständig eingebetteten reflektierenden Glasperlen versehenen Farbtropfen trocknen bzw. aushärtet lässt.

10. Verfahren nach Anspruch 7 oder 8, **dadurch gekennzeichnet, dass** man die erwähnte flüssige Farbmasse aus einem Behälter tropfen lässt und die Farbtropfen während des Fallens von mehreren Seiten her mit reflektierenden Glasperlen, die wesentlich kleiner als die Farbtropfen sind, besprüht, woraufhin man die mit reflektierenden Glasperlen bedeckten und gegebenenfalls reflektierende Glasperlen enthaltenden Farbtropfen trocknen bzw. aushärten lässt.

11. Verfahren nach einem der Ansprüche 7 bis 10, **dadurch gekennzeichnet, dass** die reflektierenden Glasperlen zuvor mit einem Haftvermittler behandelt werden.

12. Vorrichtung zur Durchführung des Verfahrens nach Anspruch 9, mit einem die flüssige Farbe aufnehmenden Behälter (1), aus dem die Farbe heraustropfen kann, und mit einer darunter angeordneten Unterlage zur Aufnahme der Glasperlenschicht (5), **dadurch gekennzeichnet, dass** der Behälter (1)einen mehrere Öffnungen aufweisenden perforierten Boden (2) hat und die Unterlage ein Förderband (3) ist, und dass in Vorschubrichtung des Förderbandes (3) hinter dem Behälter (1) ein Perlstreubehälter (4) zum Streuen von reflektierenden Glasperlen (7) auf das Förderband (3) angeordnet ist.

13. Vorrichtung zur Durchführung des Verfahrens nach Anspruch 10, **dadurch gekennzeichnet, dass** sie einen Behälter (20) mit perforiertem Boden (21) zur Aufnahme der flüssigen Farbmasse und darunter um die Fallstrecke der Farbtropfen (8) verteilt angeordnete Perlstreupistolen (22) zum Beschiessen der fallenden Farbtropfen mit reflektierenden Glasperlen (6) sowie darunter gegebenenfalls Mittel zum Trocknen bzw. Aushärten, insbesondere zur UV-Trocknung, aufweist.

## Claims

1. Reflective body to be applied on horizontal markings of traffic - or of traffic guiding surfaces, consisting of a multitude of reflecting glass beads, which are held together by an adhesive, where the adhesive consists of a dried or hardened colour mass forming drops in the liquid condition, **characterised by** the fact that the dried or hardened colour drop forms a hard core with a diameter respectively a maximum linear dimension of 0,5 to 4,0 mm, preferably of 1,0 to 3,0 mm, and by the fact that the circumference of the hard colour drop is covered with a multitude of reflecting glass beads partially immersed into the hard colour drop before the drying respectively hardening of the same, the reflecting glass beads being substantially smaller than the colour drop.

2. Reflective body according to claim 1, **characterised by** the fact that the colour drop furthermore comprises a multitude of reflecting glass beads already mixed into in the colour mass, preferably 15% to 30%.

3. Reflective body according to claim 1 or 2, **characterised by** the fact that the reflecting glass beads have a refraction index of at least 1.90.

4. Reflective body according to one of claims 1 to 3, **characterized by** the fact that the mentioned colour mass consists of a multi-component material such as methylmetacrylate, of a thixotropic water colour such as Aquaplast (registered trade mark) or a thermoplastic or UV-hardenable material.

5. Reflective body according to one of the preceding claims, **characterized by** the fact that the colour drop consists of a colour mass of white or of another colour.

6. Reflective body according to one of the preceding claims, **characterized by** the fact that the reflecting glass beads have a diameter of 40 to 400 µ, preferably of 100 to 250 µ.

7. Procedure for manufacturing reflective bodies, which are intended to be applied on horizontal markings of traffic surfaces and of traffic guiding surfaces, according to which one lets drip off a liquid, drop forming, hardenable colour mass under formation of colour drops and brings it in contact with reflecting glass beads, **characterized by** the fact that colour drops with a diameter respectively a maximum linear dimension of 0,5 to 4,0 mm, preferably of 1,0 to 3,0 mm, are formed, and by thee fact that the still liquid colour drops are brought in contact with reflecting glass beads, which are substantially smaller than the colour drops, such that a multitude of these reflecting glass beads each embeds itself into the colour surface of the drops, whereupon one lets dry respectively harden the colour drops provided in such a way with reflecting glass beads.

8. Procedure according to claim 7, **characterized by** the fact that one lets drip the liquid colour mass out of openings in the bottom of a container receiving the colour mass and that the viscosity of the colour mass as well as the size of the openings of the container bottom is chosen in such a way that colour drops with the mentioned given droplet size form.

9. Procedure according to claim 7 or 8, according to which a multilayer of reflecting glass beads is spread out on a support, onto which one lets drip the mentioned liquid colour mass, while the support and the dripping colour mass are moved relatively to each other, **characterized by** the fact that reflecting glass beads with diameters of 40 to 400 µ are used, and by the fact that before the drying respectively hardening of the fallen down colour drops further reflecting glass beads of the size mentioned are strewn on the still liquid colour drops being situated on the support, covering the first mentioned reflecting glass beads, such that a sandwich-like arrangement of liquid colour drops jammed between glass bead layers develops, whereupon one lets dry respectively harden the colour drops provided with partially and eventually completely embedded reflecting glass beads.

10. Procedure according to claim 7 or 8, **characterized by** the fact that one lets drip the mentioned liquid colour mass out of a container and sprays reflecting glass beads, which are substantially smaller than the colour drops, from several sides onto the colour drops during its falling, whereupon one lets dry respectively harden the colour drops covered with and eventually containing reflecting glass beads.

11. Procedure according to one of claims 7 to 10, **characterized by** the fact that the reflecting glass beads are treated beforehand with an adhesion means.

12. Device for carrying out the procedure according to claim 9, with a container (1) receiving the liquid colour, from which the colour can drip out, and with a support arranged beneath it for the admission of the glass bead layer (5), **characterized by** the fact that the container (1) has a perforated bottom (2) comprising several openings and that the support is a conveyor belt (3), and by the fact that a beads strew tank (4) for strewing reflecting glass beads (7) on the conveyor belt (3) is arranged, in feed direction of the conveyor belt (3), behind the container (1).

13. Device for carrying out the procedure according to claim 10, **characterized by** the fact that it comprises a container (20) with perforated bottom (21) for the admission of the liquid colour mass and, beneath it, arranged to be distributed about the dropping line of the colour drops (8), beads strew pistols (22) for firing reflecting glass beads (6) onto the falling colour drops as well as, beneath it, eventually means for drying respectively hardening, in particular for UV drying.

## Revendications

1. Corps réfléchissant à appliquer sur des marquages horizontaux des surfaces de circulation ou des surfaces de guidage de circulation, constitué d'une multitude de perles de verre réfléchissantes qui sont liées par une colle, la colle étant composée d'une masse de couleur séchée et durcie formant des gouttes dans l'état liquide, **caractérisé par le fait que** la goutte de couleur séchée ou durcie forme un noyau dur avec un diamètre respectivement une dimension linéaire maximale de 0,5 à 4,0 mm, de préférence de 1,0 à 3,0 mm, et **par le fait que** la circonférence de la goutte de couleur dure est couverte par une multitude de perles de verre réfléchissantes immergées partiellement dans la goutte de couleur dure avant le séchage respectivement le durcissement de celle-ci, les perles de verre étant largement plus petites que la goutte de couleur.

2. Corps réfléchissant selon la revendication 1, **caractérisé par le fait que** la goutte de couleur comprend en outre une multitude de perles de verre réfléchissantes déjà mélangées dans la masse de couleur, de préférence 15% à 30%.

3. Corps réfléchissant selon la revendication 1 ou 2, **caractérisé par** fait que les perles de verre réfléchissantes ont un indice de réfraction d'au moins 1,90.

4. Corps réfléchissant selon l'une des revendications 1 à 3, **caractérisé par le fait que** la masse de couleur mentionnée se compose d'un matériau multi-composants comme du méthylmetacrylate, d'une couleur d'eau thixotrope comme de l'aquaplast (marque déposée) d'un matériau thermoplastique ou durcissable par UV.

5. Corps réfléchissant selon l'une des revendications précédentes, **caractérisé par le fait que** la goutte de couleur se compose d'une masse de couleur blanche ou d'une autre couleur.

6. Corps réfléchissant selon l'une des revendications précédentes, **caractérisé par le fait que** les perles de verre réfléchissantes ont un diamètre de 40 ä 400 µ, de préférence de 100 à 250 µ.

7. Procédé de fabrication des corps réfléchissants destinés à être appliqués sur des marquages horizontaux des surfaces de circulation ou des surfaces de guidage de circulation, selon lequel on laisse égoutter une masse de couleur liquide, formant des gouttes et durcissable sous formation des gouttes de couleur et l'amène en contact avec des perles de verre réfléchissantes, **caractérisé par le fait que** des gouttes de couleur avec un diamètre respectivement une dimension linéaire maximale de 0,5 à 4,0 mm, de préférence de 1,0 à 3,0 mm, sont formées et que les gouttes de couleur encore liquides sont amenées en contact avec les perles de verre réfléchissantes qui sont largement plus petites que les gouttes de couleur de telle manière qu'une multitude de ces perles de verre réfléchissantes s'intègre dans la surface de couleur des gouttes, sur quoi on laisse sécher respectivement durcir les gouttes de couleur ainsi fournies avec des perles de verre réfléchissantes.

8. Procédé selon la revendication 7, **caractérisé par le fait qu'**on laisse goutter la masse de couleur liquide en dehors d'un récipient recevant la masse de couleur par des ouvertures dans le sol du récipient et que la viscosité de la masse de couleur ainsi que la dimension des ouvertures du sol du récipient sont choisies de telle sorte que des gouttes de couleur avec la dimension de goutte prédéfinie mentionnée se forment.

9. Procédé selon la revendication 7 ou 8, selon lequel une multicouche de perles de verre réfléchissantes est répandue sur un support sur lequel on laisse s'égoutter la masse de couleur liquide mentionnée, pendant que le support et la masse de couleur s'égouttant sont déplacés relativement l'un par rapport à l'autre, **caractérisé par le fait que** des perles de verre réfléchissantes avec des diamètres de 40 à 400 µ sont utilisées et qu'avant le séchage respectivement le durcissement des gouttes de couleur tombées d'autres perles de verre réfléchissantes de la dimension citée sont épandues sur les gouttes de couleur encore liquides se trouvant sur le support et couvrant les perles de verre réfléchissantes mentionnées en premier, de sorte qu'une disposition du type sandwich de gouttes de couleur serrées entre des couches de perles de verre se forme, sur quoi on laisse sécher respectivement durcir les gouttes de couleur munies des perles de verre réfléchissantes partiellement et éventuellement complètement intégrées.

10. Procédé selon la revendication 7 ou 8, **caractérisé par le fait qu'**on laisse goutter la masse de couleur liquide mentionnée hors d'un récipient et arrose les gouttes de couleur pendant leur chute à partir de plusieurs côtés avec des perles de verre réfléchissantes qui sont largement plus petites que les gouttes de couleur, sur quoi on laisse sécher respectivement durcir les gouttes de couleur couvertes et éventuellement contenant des perles de verre réfléchissantes.

11. Procédures selon l'une des revendications 7 à 10, **caractérisé par le fait que** les perles de verre réfléchissantes sont traités auparavant avec un moyen d'adhésion.

12. Dispositif pour la mise en oeuvre du procédé selon la revendication 9, avec un récipient (1) contenant la couleur liquide, la couleur pouvant goutter en dehors du récipient, et avec un support disposé en dessous pour l'admission de la couche des perles de verre (5), **caractérisé par le fait que** le récipient (1) a un sol (2) perforé comportant plusieurs ouvertures et que le support est un convoyeur (3), et **par le fait que** derrière le récipient (1), en direction du mouvement d'avance du convoyeur (3), un containeur de dispersion de perles (4) est disposé pour répandre des perles de verre réfléchissantes (7) sur le convoyeur (3).

13. Dispositif pour la mise en oeuvre du procédé selon la revendication 10, **caractérisé par le fait qu'**elle comprend un récipient (20) avec un sol perforé (21) pour l'admission de la masse de couleur liquide et en dessous, distribué autour du chemin de chute des gouttes de couleur (8), des pistolets de dispersion de perles (22) pour tirer des perles de verre réfléchissantes (6) sur des gouttes de couleur tombantes ainsi qu'en dessous éventuellement des moyens pour le séchage respectivement le durcissement, en particulier pour le séchage UV.
